Europäisches Patentamt

European Patent Office

Office européen des brevets

(19)

(11) Publication number: **0 385 677**
**A2**

# EUROPEAN PATENT APPLICATION

(21) Application number: 90301981.8

(22) Date of filing: 23.02.90

(51) Int. Cl.5 **B65D 30/08, B65D 65/40, B32B 27/32**

(30) Priority: 01.03.89 GB 8904651

(43) Date of publication of application:
05.09.90 Bulletin 90/36

(84) Designated Contracting States:
BE DE DK ES FR GB IT NL

(71) Applicant: COURTAULDS FILMS &
PACKAGING (HOLDINGS) LTD.
Bath Road
Bridgwater Somerset TA6 4PA(GB)

(72) Inventor: Hartshorn, William Ian Stanley
Rannoch, Orchard Close, Cossington
Bridgwater, Somerset(GB)

(74) Representative: Claisse, John Anthony, Dr.
Patents Department, Courtaulds Films &
Packaging (Holdings) Ltd, Bath Road
Bridgwater Somerset TA6 4PA(GB)

(54) Packaging materials.

(57) A heat sealable double wall bag for the controlled atmosphere packaging of fresh meat, the bag having inner and outer polymeric walls, the outer wall comprising a polymeric film having gas barrier properties so that a controlled atmosphere is maintained within the bag once the bag has been heat sealed, and the inner wall serving to protect the outer wall from being punctured by bones in meat packaged in the bag, the inner and outer walls being joined over only part of their contacting surfaces so that the atmosphere therebetween can be evacuated when the interior of the bag is evacuated.

## PACKAGING MATERIALS

This invention concerns packaging materials, in particular for extending the shelf life of fresh meat.

Various packaging materials have been proposed for extending the shelf life of fresh meat. Vacuum packaging techniques, in which the meat is sealed in a polymeric bag, combined with gas flushing of the bag, have enabled considerable improvements in shelf life to be achieved. However, great care has to be exercised in carrying out such techniques since sharp projections on the meat, in particular bones, can puncture the packaging materials conventionally used. This has led to the use of materials which function as a so called bone-guard.

British Patent Specification 2199284-A, for example, describes the use of a multi-layer packaging material consisting of an inner polymeric layer which is permeable to liquid and to carbon dioxide, an outer polymeric layer of a polymer which restricts the flow of carbon dioxide into packaged meat, and a liquid absorbent layer between the two polymeric layers. Joints of fresh meat are then wrapped in these packaging materials, the materials being primarily intended for the packaging of individual pieces of fresh meat which are then packaged with other pieces of meat in a larger package where a desired atmosphere is created and then maintained by further high barrier packaging materials.

Such packaging techniques are expensive both in materials and time. Thus, it is necessary to produce both an expensive multilayer packaging material and a further gas barrier material, in addition to having to wrap each joint separately in the multilayer material before placing it in the gas barrier material.

The present invention therefore seeks to provide simpler packaging materials for fresh meat which avoid the necessity for separately wrapping each joint of meat and thereafter enclosing the wrapped meat in a container of a high barrier material.

According to the present invention there is provided a heat sealable double wall bag for the controlled atmosphere packaging of fresh meat, the bag having inner and outer polymeric walls, the outer wall comprising a polymeric film having gas barrier properties so that a controlled atmosphere is maintained within the bag once the bag has been heat sealed, and the inner wall serving to protect the outer wall from being punctured by bones in meat packaged in the bag, the inner and outer walls being joined over only part of their contacting surfaces so that the atmosphere therebetween can be evacuated when the interior of the bag is evacuated.

The outer wall of bags of the present invention is of a polymeric film having gas barrier properties which provides a controlled atmosphere within the bag once the bag has been sealed. It is often required to control the atmosphere within the sealed bags, and known films can be used for the purpose. Typically, the outer wall will include a layer of an ethylene/vinyl alcohol copolymer which serves as a barrier to gases, e.g. carbon dioxide, nitrogen and/or oxygen.

In addition to having gas barrier properties, the outer wall should be heat sealable so that the bags can be heat sealed to maintain the desired controlled atmosphere therein. This can be achieved by the outer wall having at least one heat seal layer so that one or other surface of the outer wall can be heat sealed to either or both of its surfaces. Suitable heat seal layers are known to those skilled in the art.

The outer wall will usually be from 40 to 200 microns thick, the exact thickness being selected for example to control the efficiency with which the controlled atmosphere is maintained and/or to provide the outer wall with adequate physical strength. The inner wall serves to protect the outer wall from being punctured by bones in meat packaged within the bag. The inner wall should therefore be of a polymeric material with puncture resistance. Polyethylene films and coextrusions have provided satisfactory properties, for example at a thickness of from 50 to 150 microns.

The inner and outer walls of heat sealable double wall bags of the present invention are joined to facilitate the insertion of joints of meat into the bags so that they are surrounded by the inner wall, but over only part of their contacting surfaces, to provide the bags with flexibility while enabling the atmosphere between the inner and outer walls to be evacuated when the interior of the bags is evacuated during the creation of the controlled atmosphere within the bags.

The manner of joining can be selected as desired. However, where the inner wall is itself an intact bag within the outer wall, which is also an intact bag, it is generally preferred to join the upper edge of the inner wall to the outer wall at points along the upper edge of the inner wall.

In an alternative embodiment, the inner wall is in the form of a bag which is open at the top but is incompletely closed along at least one other side, for example along the bottom. The top edge of the bag forming the inner wall can then be joined to the outer wall along all or only part of its length since the space between the inner and outer walls can still be evacuated when the interior of the bag itself is evacuated.

A particularly preferred form of construction of bag in accordance with the invention consists of an inner bag and an outer bag, each of the inner and outer bags being closed on three sides and open on a fourth, the edges of the respective closed sides of the inner and outer bags being common. This can be made by heat sealing three sides of a composite structure consisting of a layer of outer wall material, two layers of inner wall material, and a final layer of outer wall material, the contacting pairs of inner and outer wall materials being joined along part of the length of what becomes the open side of the inner bag formed when the composite structure has been heat sealed along three sides.

The gap between the inner and outer walls can contain various items, as desired. For example, absorbent materials can be inserted between the walls for absorbing exudate from packaged meat. Chemical reducing agents, e.g. in sachets, can be introduced to affect the controlled atmosphere. Other items which can be inserted into the gap include labels and tickets indicating, for example, packaged contents, supplier and/or packer, sell by dates etc.

In use, joints of fresh meat, especially large cuts and even whole carcases, are inserted into the bag between the inner walls. The bag will then usually be evacuated and a controlled atmosphere introduced into the interior of the bag, this procedure being effected, for example, in known manner. The bag is then heat sealed to seal the fresh meat in the bag and in the controlled atmosphere. The inner wall then serves to protect the outer wall from being punctured by bones in the meat, not only during evacuation of the interior of the bag during the packaging process itself, but during subsequent transport.

## Claims

1. A heat sealable double wall bag for the controlled atmosphere packaging of fresh meat, the bag having inner and outer polymeric walls, the outer wall comprising a polymeric film having gas barrier properties so that a controlled atmosphere is maintained within the bag once the bag has been heat sealed, and the inner wall serving to protect the outer wall from being punctured by bones in meat packaged in the bag, the inner and outer walls being joined over only part of their contacting surfaces so that the atmosphere therebetween can be evacuated when the interior of the bag is evacuated.

2. A bag according to claim 1, wherein the outer wall comprises a multilayer film including at least one layer of an ethylene/vinyl alcohol copolymer.

3. A bag according to either of the preceding claims, wherein the outer wall has a thickness of from 40 to 200 microns.

4. A bag according to any of the preceding claims, wherein the inner wall is in the form of a further bag.

5. A bag according to any of the preceding claims, wherein the inner wall comprises a layer or composite layer of a polymeric film.

6. A bag according to claim 5, wherein the polymeric film is of polyethylene.

7. A bag according to any of the preceding claims, wherein the inner wall is from 50 to 150 microns thick.

8. A bag according to any of the preceding claims, wherein the inner and outer walls are each in the form of a bag closed on three sides and open on a fourth, the edges of the respective closed sides of each bag being common.

9. A bag according to any of the preceding claims, wherein an absorbent material is present between the inner and outer walls.

10. A bag according to any of the preceding claims, wherein a chemical reducing agent is present between the inner and outer walls.